# EUROPEAN PATENT APPLICATION

(11) **EP 0 557 617 A1**
(43) Date of publication of application: **01.09.1993**
(21) Application number: 92200534.3
(22) Date of filing: 25.02.1992
(51) Int. Cl.: B05C 1/06, C04B 14/48, E04C 5/01

(54) **Strip of reinforcing fibres**

(71) Applicant: N.V. BEKAERT S.A., B-8550 Zwevegem (BE)
(72) Inventor: Vancoillie, Eddy, B-8554 Sint-Denijs (BE)
(74) Representative: Vandevelde, Willy V.G.

(57) **Abstract**

A strip for reinforcing fibres for mixing into mortar, concrete or asphalt. The fibres are glued together side by side by means of a glue that dissolves or melts or otherwise looses its binding ability when mixed in such material. Glue is only laid on one side of the strip instead of dipping and wiping-off. This reduces the danger of compression into lumps during transport and storage of the bags filled with such strips, and combines the use of less glue.

## Description

The invention relates to a strip of reinforcing steel fibres, bound together side by side by a glue, said strip being adapted to be mixed in a soft mixture of a cementitious or bituminous construction material and to disintegrate therein during mixing into separate steel fibres by the loss of said glue of its binding ability.

Such strips of reinforcing steel fibres are already known from U.S. 4.224.377. In order to be adapted for mixing and equal distribution in the material during mixing in the soft mixture, and for the reinforcement thereof after hardening, the steel fibres have in general a thickness in a range from 0.3 to 1.2 millimeter, most usually from 0.5 to 0.9 millimeter, a length-to-thickness ratio from 50 to 150, most usually from 55 to 75, and a tensile strength of at least 800 Newton per square millimeter. They can be provided with means for better anchoring in the material, such as hooks, undulations or thickenings, at the extremities or at other parts of the fibre, or such as surface roughenings by mechanical or chemical treatment.

It is known to use such steel fibres for the reinforcement of cementitious or bituminous construction materials. These materials are materials that are prepared by mixing a soft mixture on the basis of cement, such as mortar or concrete, or on the basis of bitumen, such as asphalt, or on the basis of both, and that harden afterwards into a construction element, such as a beam or tube, a floor or road pavement, a tunnel lining, a dam or other construction element. Such steel fibres are mixed in the material in soft state at the time of its preparation, and come to an equal distribution by the mixing movement. And when the material hardens afterwards, these equally distributed short fibres have a reinforcing effect in the material, as is well known.

As is known from the references above, these reinforcing steel fibres are preferably introduced in the mixture in the form of strips, in which the fibres are bound together side by side by a glue, so as to form such strip. A glue is chosen that looses its binding ability in the mixture. When dumped in bulk into the mixture, the strips come rapidly to an equal distribution during a first period of mixing, and then the glue begins to dissolve or to melt or to soften or to loose its binding ability in another way, so that, in a second period, the strips come to disintegrate into separate fibres and are equally distributed over the mixture. The use of such strips avoids that the fibres come to conglomerate into balls during the mixing movement instead of being equally distributed. The glue is adapted to the intended use. For a cementitious mixture, this can be a glue that dissolves (e.g. polyvinylalcohol) or sufficiently softens (e.g. polyvinylacetate) under influence of the water of the mixture, or of another component of the mixture. And for a bituminous mixture, this can be a meltable bitumen or other glue that melts or sufficiently softens at the mixing temperature. The number of wire pieces side by side in one strip ranges from 5 up to 30, preferably from 10 up to 25.

The present method of making such strips has been described in U.S. Patent No. 4.224.377 and is a continuous process. This means that long lengths of wire continuously travel lengthwise along a number of consecutive fixed operation stations, each of which carrying out one of the consecutive operation steps. This continuous process comprises the consecutive steps of bundling a number of wires into a continuous strip, entering said strip into a bath of liquid glue, extracting the so wetted strip from said bath and wiping-off the excess of glue, causing the glue that remains on said continuous strip to solidify and cutting said continuous strip transversely into pieces. The wiping-off action occurs by passing the strip between two flexible wipers located on either side of the strip. The way in which the liquid glue is caused to solidify depends on the type of glue. According as the liquid glue is a cold aqueous glue or a hot molten glue, the solidification will be obtained by drying in a heating furnace, respectively by cooling down in the air or in a cooling chamber. Optionally, when the fibres are intended to have undulations or hooks, the necessary wire deformations can be given on the continuous strip, before the cutting step, by bendings outside the plane of the strip. After the cutting step, the strips are ready and packed in boxes or bags. In contrast to separate fibres, there is no danger that they come to entangle into balls during transport, so that the mass mustnot be unraveled before mixing.

Such glued strips as presently known, present however a problem, that in warm and humid climate conditions, under the pressure of the weight of the mass, the glue weakens somewhat and the strips come to stick to each other. When filling the bags or boxes indeed, the strips behave like small plates and have the tendency to lay themselves into horizontal layers, one side of the one against the other side of the other. Such lumps of strips do not permit an easy handling and dosing of the quantity to enter into the mixture. A solution in the sense of a glue that weakens less rapidly, e.g. an aqueous glue that is harder baked in the drying furnace, puts another problem : that the strips last too long to disintegrate when mixed in the concrete. A solution in the sense of a stronger wiping action of the strip surface puts a number of other practical problems : the dosing of the lower quantity of glue becomes more critical, the necessity of hard unflexible wipers giving problems of their correct positioning and often undesirable scratching of the wire surface.

It is an object of the present invention to improve the existing steel wire strips in a way that the danger of sticking into lumps is reduced, without causing problems of more difficult disintegration, without the need of any strong wiping-action, and permitting a reduction of the glue quantity per strip, without additional dosing problems.

According to the invention, the strip is characterized by the fact that the glue is about for its totality present on only one of both sides of the strip.

In providing only one side of the strip with glue, the strip cannot stick on both sides with its neighbours, so that concatenations of only two stuck strips are possible in principle, which reduces the possibility of the mass to stick into lumps. Further : with the same wiping action, not stronger than before, and with the same precision as to dosing, only half of the glue is laid. The danger that this would result into strips where the wires would be less strongly stuck to each other can be avoided e.g. by baking the glue somewhat harder in the drying furnace, or using a harder glue. The disadvantage, as mentioned before, that this would result into a longer duration of disintegration of the strip during mixing, is compensated by the fact that there is less glue to dissolve. And the harder glue will make the sticking of the strips into lumps even more difficult.

The invention also provides a strip that can be made with less glue than the conventional strips. To that end, the strip is made in a continuous process, which comprises the bundling of a number of wires side by side into a continuous strip, applying said glue over the whole breadth of only one side of the strip, causing the strip with the so applied glue to solidify, and cutting said continuous strip transversely into pieces. This is the same method as mentioned above, but where the steps of entering the strip into a bath of glue, extracting it from said bath and wiping it off, are replaced by the step of applying the glue, e.g. by means of a brush that is supplied with a continuous flow of glue, over the whole breadth of only one side of the strip. With a same wiping action during the application of the glue, e.g. the wiping action of the brush, as the wiping action of the wipers in the previous method, only half of the glue is applied, as compared with the method of dipping and wiping off. This means less than 12 grams per kilogram of steel instead of the conventional 20 grams approximately.

But the step of applying the glue over the whole breadth of only one side of the strip can even be realized in two operations : first continuously laying said glue lengthwise and over only one part of the breadth of said one side of the strip, an then spreading said glue over the whole breadth. A continuous long and more or less liquid worm of glue can be pressed out of an orifice and laid lengthwise over the strip that travels along said orifice, and this worm can then be spread out over the whole breadth by passing along a number of brushes. For applying reduced and well-dosed amounts of glue, the method of laying and spreading out is more appropriate than the method of dipping and wiping off. Advantage is taken of this method to apply even less than 10 grams per kilogram of steel, e.g. 8 grams or less.

Although the invention aims at one side of each strip to be completely free of glue, this will not always be obtained because of some glue that can fortuitously seep through the strip towards the other side. But the mentioned advantages are then still maintained in substance. Consequently, the glue has only to be about for its totality, e.g. for more than 90 %, present on only one side of the strip.

The invention shall here further be illustrated with reference to some drawings in which
- Figure 1: shows an installation for manufacturing the steel fibre strips according to the invention ;
- Figure 2: shows a resulting steel fibre strip according to the invention ;
- Figure 3: shows a pair of fibre forms.

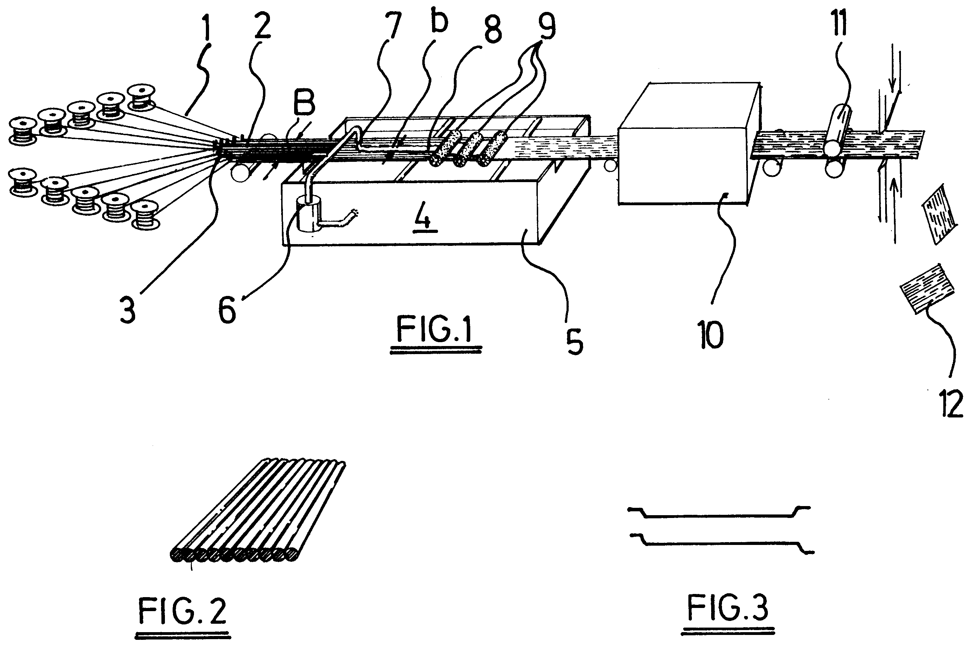

In the installation according to Figure 1, a number of continuous wires 1 are unreeled from a number of bobbins and made to travel continuously towards a glueing station 4. In so traveling, the wires are guided so as to converge and to form a continuous strip 2 of loose wires side by side in one horizontal plane. Care is taken that neighbouring wires make linear contact with each other as much as possible. This can be achieved by the guiding pins 3. The continuous strip 2 is then entered into the glueing station 4, which comprises a container 5 that is filled, in this example, with an aqueous glue at room temperature. The strip passes horizontally over the container, without entering into the glue. The glueing station 4 comprises further a supply pump 6, of which the entry is connected by means of a tube with the content of the container, and of which the exit is connected with an orifice 7, just above the strip. The pump pushes the glue through said orifice 7, whereby a strip 8 of liquid glue is laid lengthwise on the steel wire strip 2, according as the strip 2 passes along the orifice. This orifice 7 has a diameter of less than the breadth B of the steel wire strip 2, so that the glue is laid over a breadth b, that is only a part of the breadth of the strip 2. The pump supplies a quantity of 8 gram per kilogram of steel. The glueing station 4 further comprises a number of spreading brushes 9 of which the position is adjusted so as to spread the glue over the upper surface of the glue. The glue used in this example is a conventional aqueous glue, such as a suspension of about 75 % polyvinyl-acetate with about 25 % of polyvinylalcohol, that is soluble in water. It is however clear that other glues, obtainable on the market can be used, in so far as such glue looses its glueing effect, by melting of softening or dissolution or otherwise, when mixed in a cementitious or hot bituminous mixture.

After leaving the glueing station 4, the wire strip passes through a drying furnace 10, where the glue is dried, and passes further between two driving rollers 11. The latter draw the wires off from the bobbins, and through the installation. In order to ensure a good positioning of the loose wires in the strip 2, it is preferred that the bobbins have a slight braking effect, so that the wires are somewhat under tension. On emerging from the rollers, the wire strip 2 is transversely cut into pieces 12. The resulting strip of ten glued fibres is shown in Figure 2. These are straight fibres. It may be desirable however to obtain strips with fibres provided with hooks on both ends, as shown in Figure 3, or with undulations over the length. In that case, it is possible to pass the strip 2 of wires between two deforming rollers (not shown) located after the drying furnace 10.

## Claims

1. A strip of reinforcing steel fibres, bound together side by side by a glue, said strip being adapted to be mixed in a soft mixture of a cementitious or bituminous construction material, and to disintegrate during mixing into separate steel fibres by the loss of said glue of its binding ability, characterized in that said glue is about for its totality present on only one of both sides of the strip.

2. A strip according to claim 1, in which the amount of glue is less than 12 grams per kilogram of steel.

3. A continuous process for manufacturing strips according to claim 1, said process comprising the steps of bundling a number of wires side by side into a continuous strip, applying said glue over the whole breadth of only one side of said strip, causing the so applied glue on the strip to solidify, and cutting said continuous strip transversely into pieces.

4. A continuous process according to claim 3, in which the step of applying said glue is realized by laying said glue lengthwise and only over a part of the breadth of said one side of said continuous strip, and then spreading said glue over the whole breadth.

5. A process for manufacturing strips according to claim 1 in which the amount of glue is less than 10 grams per kilogram of steel, by the use of the process according to claim 4.
